# EUROPÄISCHE PATENTSCHRIFT

(11) **EP 3 068 728 B1**
(45) Veröffentlichungstag und Bekanntmachung des Hinweises auf die Patenterteilung: **15.08.2018**
(21) Anmeldenummer: 14802824.4
(22) Anmeldetag: 03.11.2014
(51) Int. Cl.: C01G 3/00, C01B 25/37, C08J 5/18, C08K 3/32, C09K 5/14, H05B 1/02, H05B 3/00

(54) **DOTIERTES KUPFER-II-HYDROXID-PHOSPHAT, VERFAHREN ZU DESSEN HERSTELLUNG UND VERWENDUNG**
DOPED COPPER-II-HYDROXIDE PHOSPHATE, METHOD FOR PRODUCING SAME, AND USE THEREOF
HYDROXYPHOSPHATE DE CUIVRE II DOPÉ, PROCÉDÉ POUR LE FABRIQUER ET SON UTILISATION

(30) Priorität: 11.11.2013 DE 102013112387
(43) Veröffentlichungstag der Anmeldung: 21.09.2016
(73) Patentinhaber: Chemische Fabrik Budenheim KG, 55257 Budenheim (DE)
(72) Erfinder: WISSEMBORSKI, Rüdiger, 55435 Gau-Algesheim (DE); SAUER, Esther, 65474 Bischofsheim (DE); SCHNEE, Rainer, 55130 Mainz (DE); FICHTMÜLLER, Moritz, 61440 Oberursel (DE); VOGT, Robert, 71034 Böblingen (DE); KÜMMET, David, 55257 Budenheim (DE)
(74) Vertreter: WSL Patentanwälte Partnerschaft mbB
(86) Internationale Anmeldenummer: PCT/EP2014/073509
(87) Internationale Veröffentlichungsnummer: WO 2015/067545

(56) Entgegenhaltungen:
- WO-A1-2005/052049
- DE-A1- 19 905 358
- DE-A1-102004 050 478

## Beschreibung

### Gegenstand der Erfindung

Die Erfindung betrifft eine Kupfer als metallischen Hauptbestandteil enthaltende gemischtmetallische Phosphatverbindung, ein Verfahren zu deren Herstellung sowie deren Verwendung.

### Hintergrund der Erfindung

Beim Blasformen von Kunststoffteilen aus thermoplastischem Polymer, insbesondere von Kunststoffhohlkörpern, beispielsweise PET-Flaschen, werden Vorformlinge aus dem Polymermaterial, sogenannte Preforms, erhitzt, um das Polymermaterial zu erweichen, und unter Einblasen von Gas unter Druck in einer Form in die gewünschte Gestalt überführt. Eine häufig eingesetzte Maßnahme unter verschiedenen Möglichkeiten zum Erhitzen der Preforms ist die Bestrahlung mit Infrarotstrahlen (IR). Dabei ist die Effektivität des Erhitzens und somit die Wirtschaftlichkeit des Verfahrens umso höher, je stärker die Strahlung von dem Polymermaterial absorbiert und in Wärme umgesetzt wird. Es kann daher vorteilhaft sein, dem Polymermaterial Strahlungsabsorber zuzusetzen, welche die Strahlungsabsorption des Materials verbessern.

Materialien, die als Strahlungsabsorber in Polymermaterialien wirken, sind grundsätzlich bekannt. Probleme, die mit der Ausrüstung des Polymermaterials mit Strahlungsabsorbern jedoch einhergehen können, sind beispielsweise die fehlende Lebensmitteltauglichkeit oder gar die Toxizität vieler als Strahlungsabsorber grundsätzlich geeigneter Materialien, was sie für viele Anwendungen ungeeignet macht, beispielsweise für Lebensmittelverpackungen, wie PET-Flaschen. Des Weiteren können als Strahlungsabsorber grundsätzlich geeignete Materialien die Eigenschaften des Polymermaterials beeinträchtigen, beispielsweise Stabilität, Festigkeit und Flexibilität oder auch die Barriereeigenschaften des Polymermaterials.

Ein weiterer Nachteil bekannter Materialien, die als Strahlungsabsorber in Polymermaterialien wirken, ist der Wellenlängenbereich, in dem die Materialien die Strahlungsabsorption verbessern können. Viele Strahlungsabsorber absorbieren überwiegend im kürzerwelligen IR-Bereich, wie beispielsweise Kupferhydroxidphosphat, welches eine relativ gute Absorption im Bereich von etwa 800 bis 1600 nm mit einem Maximum bei etwa 1200 nm aufweist, nicht jedoch im längerwelligen Strahlungsbereich. Daher sind bei der Anwendung solcher Strahlungsabsorber kurzwellige Strahler einzusetzen, die jedoch in der Regel teurer sind als längerwellige Strahler. Andere Strahlungsabsorber, die wiederum im längerwelligen IR-Bereich ab etwa 1600 nm und darüber eine gute Absorption aufweisen, wie beispielsweise Plättchensilikate, besitzen häufig keine gute Absorption im kürzerwelligen IR-Bereich. Ein breiteres Wellenlängenspektrum des Strahlungsabsorbers wäre vorteilhaft, um die Energie von Strahlern, die in einen breiten Wellenlängenbereich strahlen, besser nutzen zu können. Insbesondere wäre eine Absorption im längerwelligen IR-Bereich ab etwa 1600 nm und darüber vorteilhaft, da längerwellige Strahler relativ preiswert zur Verfügung stehen.

Manche Strahlungsabsorber besitzen darüber hinaus eine Eigenfärbung, die bei Einarbeitung des Strahlungsabsorbers auf das Polymermaterial übergeht und/oder eine Trübung des Polymermaterials bewirken. Beispielsweise besitzt Ruß eine sehr gute Absorption über den gesamten Bereich des IR-Spektrums, er weist aber auch im sichtbaren Bereich des Spektrums eine hohe Absorption und damit eine sehr hohe Eigenfarbe auf, weshalb sein Einsatz sehr limitiert ist.

Die WO-A-03/033582 beschreibt ein Mittel zur Absorption von UV-Strahlung auf der Basis von gemischtem Cer- und Titanphosphat für die Einarbeitung in ein Polymermaterial. Die US-A-7258923 beschreibt mehrlagige Gegenstände mit einer innersten Schicht aus einem thermoplastischen Polymer, welches IR-absorbierende Additive enthält, die unter Boriden der Übergangsmetalle und der Lanthanide ausgewählt sind. Die US-A-5830568 beschreibt ein Verbundglas mit einer Zwischenschicht aus PVB oder Ethylvinylacetat-Copolymer mit darin für eine Lichtabsorption dispergierten funktionalen ultrafeinen Metalloxidpartikeln.

Die DE 102004050478 beschreibt eine Formmasse für die Herstellung schwer entflammbarer Gegenstände mit gleichzeitiger Laserbeschreibbarkeit, welche eine Matrix aus einem Thermoplasten mit darin dispergiertem teilchenförmigem flammhemmendem Pigment hat, wobei das Pigment unter dem Einfluss von Laserlicht seine Farbe oder die Farbe der Kunststoff-Matrix ändert und das Pigment ein Reaktionsprodukt wenigstens einer halogenfreien flammhemmenden organischen Stickstoffbase mit einem Salz oder Salzgemisch ist, das mit der organischen Stickstoffbase umsetzbar ist.

Kupfer(II)hydroxidphosphat, das in der Literatur auch als basisches Kupferphosphat bezeichnet wird, wird als Additiv in Kunststoffen zu verschiedenen Zwecken eingesetzt. Beispielsweise wird es gemäß der DE 3917294 und DE 4136994 Kunststoffen zugemischt, um sie mittels Laserstrahlen beschriftbar zu machen. Die DE 19905358 offenbart zum Beschriftbarmachen von Polymermaterialien mittels Laserlicht die Verwendung von Alkalikupferdiphosphat, insbesondere Kaliumkupferdiphosphat, um damit einen mit Kupferhydroxidphosphat einhergehenden unerwünschten Grünstich zu vermeiden und einen möglichst hohem Farbkontrast zu erzielen.

Das bekannte Verfahren zur Herstellung von Kupfer(II)hydroxidphosphat besteht darin, dass man basisches Kupfercarbonat in wässriger Dispersion mit mindestens stöchiometrischen Mengen Phosphorsäure bei Temperaturen unterhalb 70 °C behandelt, die entstandene Reaktionsmischung im gleichen Temperaturbereich mechanisch weiterbewegt, dann kurzzeitig auf Siedetemperatur erhitzt und schließlich das Kupfer(II)hydroxidphosphat abtrennt. Dieses Verfahren ist in der DE 3342292 beschrieben. Es hat verschiedene Nachteile. Die Reaktionszeiten sind extrem lang, bis zu 12 h, was bei der Gewinnung in großtechnischem Maßstab äußerst unerwünscht ist. Außerdem wird bei dem Verfahren CO₂ entwickelt, das zu unerwünschter Schaumbildung und Problemen der Arbeitssicherheit führt.

Die DE 10 2009 001 335 A1 beschreibt ein Strahlung absorbierendes, kunststoffbasierendes Material, bestehend aus einer Polymermatrix mit einem darin enthaltenen Absorbermaterial, welches unter Phosphaten, kondensierten Phosphaten, Phosphonaten, Phosphiten und gemischten Hydroxid-Phosphat-Oxoanionen von Kupfer (Cu), Zinn (Sn), Calcium (Ca) und Eisen (Fe) ausgewählt ist und in der Polymermatrix fein verteilt, dispergiert oder gelöst vorliegt, wobei das Absorbermaterial auch ein Gemisch der vorgenannten Stoffe sein kann. Bevorzugte Absorbermaterialien sind Trizinnphosphat, Trikupferphosphat, Kupferdiphosphat, Kupferhydroxidphosphat und Gemische davon. Das beschriebene Material eignet sich unter anderem als Verpackungsmaterial für Handelsprodukte, insbesondere Lebensmittel, oder kosmetische Mittel und soll UV- oder IR-Strahlung absorbieren und Licht aus dem sichtbaren Bereich des Spektrums nicht oder nur in geringem Maße zurückhalten und möglichst keine unerwünschte Eigenfärbung oder Trübung des Polymermaterials aufgrund des Absorbermaterials aufweisen.

Die DE 10 2010 003 366 A1 beschreibt ein Matrixmaterial aus Kunststoff, vorzugsweise aus thermoplastischem Kunststoff, oder Lack, das ein Additiv enthält, durch welches es ermöglicht wird, durch Bestrahlung mit Laserlicht oder IR-Licht ein Schäumen des Matrixmaterials auszulösen. Das Additiv umfasst ein Absorbermaterial, welches eingebettet oder gelöst in dem Matrixmaterial Laserlicht oder IR-Licht absorbiert und eine lokale Erwärmung in dem Matrixmaterial am Ort der Bestrahlung mit Laserlicht oder IR-Licht bewirkt, und ein Treibmittel, welches beim Erwärmen aufgrund der Bestrahlung mit Laserlicht oder IR-Licht auf Temperaturen über 50 °C durch Zerfall, chemische Umwandlung oder Reaktion ein das Matrixmaterial schäumendes Gas erzeugt. Das Absorbermaterial kann in einer Ausführungsform unter Phosphaten, kondensierten Phosphaten, Phosphonaten, Phosphiten und gemischten Hydroxid-Phosphat-Oxoanionen verschiedener Metalle ausgewählt sein, bevorzugt unter Phosphaten von Cu, Sn, Fe, Ni, Mo, Co, Mn oder Sb. Besonders bevorzugt ist Kupferhydroxidphosphat.

Die WO 2005/052049 beschreibt thermoplastische, polymere Werkstoffe mit hoher IR-Absorption und geringer Absorption im sichtbaren Wellenlängenbereich, die mindestens ein anorganisches Metallphosphat der allgemeinen Formel Meₓ(P0₄)_{y}(OH), enthalten, wobei Me aus einem oder mehreren Elementen der Gruppe Cu, Fe, Mn, Sb, Zn, Ti, Ni, Co, V, Mg, Bi, Be, Al, Ce, Ba, Sr, Na, K, Ge, Ga, Ca, Cr, In oder Sn besteht. Bevorzugte Beispiele für geeignete anorganische Metallphosphate sind Kupferphosphate und Kupferhydroxidphosphate. Verwendung finden die thermoplastischen, polymeren Werkstoffe überall dort, wo solche Werkstoffe durch Erwärmung mittels IR-Strahlung erweicht und anschließend einer formgebenden Weiterverarbeitung unterzogen werden, beispielsweise als Vorformlinge bei der Herstellung von PET-Flaschen.

### Aufgabe

Die Aufgabe der Erfindung bestand darin, einen Strahlungsabsorber bereitzustellen, der bei Einbettung in ein Polymermaterial in einem gegenüber bekannten Strahlungsabsorbern breiteren und/oder für bestimmte Strahler geeigneteren Wellenlängenbereich absorbiert, dem Polymermaterial möglichst keine unerwünschte Eigenfärbung oder Trübung verleiht, gesundheitlich möglichst unbedenklich ist, eine gute Verarbeitbarkeit besitzt und/oder die Materialeigenschaften des Polymermaterial nicht signifikant nachteilig beeinflusst.

### Beschreibung der Erfindung

Gelöst wird diese Aufgabe durch eine gemischtmetallische Phosphatverbindung, welche als Hauptmetall Kupfer in zweiwertiger Oxidationsstufe in einem Anteil von wenigstens 90,0 At.-% und ein oder mehrere Dotierungsmetalle in einem Gesamtanteil der Dotierungsmetalle von wenigstens 0,01 bis höchstens 10,0 At.-% enthält, wobei die Dotierungsmetalle aus der Gruppe ausgewählt sind, bestehend aus den Elementen der 1. und 2. Hauptgruppe und der 8. Nebengruppe der Elemente des Periodensystems, AI, Sn, Si, Bi, Cr, Mo, Mn und den Lanthaniden, wobei sich die angegebenen Metallanteile auf die Gesamtmenge der Metalle in der gemischtmetallischen Phosphatverbindung beziehen und wobei die gemischtmetallische Verbindung einen Phosphatgehalt, ausgedrückt als P₂O₅, im Bereich von 10 bis 60 Gew.-% aufweist.

Überraschenderweise hat sich gezeigt, dass dotierte Kupfer(II)hydroxidphosphate der erfindungsgemäßen Art. gegenüber bekannten Strahlungsabsorbern, insbesondere gegenüber reinem Kupfer(II)hydroxidphosphat, das als Strahlungsabsorber bekannt war und in vielen Anwendungen eingesetzt wird, in einem breiteren und für bestimmte Strahler geeigneteren Wellenlängenbereich absorbiert. Bei Einarbeitung des dotierten Kupfer(II)hydroxidphosphats der Erfindung in ein Polymermaterial verleiht es diesem keine unerwünschte Eigenfärbung oder Trübung. Es ist je nach eingesetzten Dotierungsmetallen gesundheitlich unbedenklich, besitzt eine gute Verarbeitbarkeit und beeinflusst in den üblicherweise eingesetzten Mengen die Materialeigenschaften des Polymermaterials nicht signifikant nachteilig. Durch die erfindungsgemäße Dotierung wird insbesondere im Wellenlängenbereich oberhalb von 1400 nm eine gegenüber reinem Kupfer(II)hydroxidphosphat verbesserte Absorption erzielt, wodurch der Einsatz als Absorber für Strahler in einem breiteren Wellenlängenbereich erweitert werden kann.

In einer bevorzugten Ausführungsform der Erfindung weist die gemischtmetallische Phosphatverbindung im UV-VIS-IR-Spektrum bei wenigstens einer Wellenlänge innerhalb des Wellenlängenbereichs von über 1400 bis 2200 nm eine Absorption auf, die wenigstens 50% des Absorptionsmaximums innerhalb des Wellenlängenbereichs von 600 bis 1400 nm beträgt.

Die vorgenannte Absorptionseigenschaft lässt sich vom Fachmann in Kenntnis der Erfindung durch die Auswahl und die Mengen an Dotierungsmetallen innerhalb der erfindungsgemäßen Bereiche einstellen und durch wenige Versuche erreichen. Die hierin angegebenen Beispiele können dem Fachmann hierbei als Grundlage für geeignete Zusammensetzungen dienen. Durch Variation der darin angegebenen Dotierungsmetalle und deren Mengen lassen sich Absorptionsmaxima der Beispielzusammensetzungen entsprechend variieren und an die jeweiligen Anforderungen anpassen.

In einer weiteren Ausführungsform der Erfindung liegt der Gesamtanteil der Dotierungsmetalle im Bereich von 0,1 bis 10,0 At.-%, vorzugsweise im Bereich von 0,5 bis 10,0 At.-%, besonders bevorzugt im Bereich von 1,0 bis 10,0 At.-% oder im Bereich von 2,0 bis 5,0 At.-%. Ist der Gesamtanteil der Dotierungsmetalle in der gemischtmetallischen Phosphatverbindung zu niedrig, wirkt sich die zu erzielende Verbesserung der Absorption im Wellenlängenbereich oberhalb von 1400 nm nur schwach aus. Ist der Gesamtanteil der Dotierungsmetalle in der gemischtmetallischen Phosphatverbindung zu hoch, kann sich dies nachteilig auf die Gesamtabsorption auswirken. Ein wesentlicher Vorteil der Dotierung liegt darin, dass insbesondere im Wellenlängenbereich ab 1400 nm eine verbesserte Absorption messbar ist und damit der Einsatz als Absorber für Mittelwellenstrahler erweitert werden kann.

In einer weiteren Ausführungsform der Erfindung enthält die gemischtmetallische Phosphatverbindung das Hauptmetall Kupfer in zweiwertiger Oxidationsstufe in einem Anteil von wenigstens 95,0 At.-%.

In einer weiteren Ausführungsform der Erfindung sind die Dotierungsmetalle in der gemischtmetallischen Phosphatverbindung aus der Gruppe ausgewählt, bestehend aus Ca, Al, Fe, Sn und Zn. Die Verwendung von Ca, AI, Fe, Sn und/oder Zn als Dotierungsmetalle ist aus physiologischer Sicht vorteilhaft, da diese Elemente auch in anderen Formulierungen, z.B. im Bereich der Lebensmittelzusatzstoffe eingesetzt werden und gesundheitlich überwiegend unbedenklich sind, weshalb sich ihre Verwendung insbesondere in Absorbern für die Herstellung von Lebensmittelverpackungen eignet.

In einer weiteren Ausführungsform der Erfindung weist die gemischtmetallische Phosphatverbindung einen Phosphatgehalt, ausgedrückt als P₂O₅, im Bereich von 15 bis 50 Gew.-%, vorzugsweise im Bereich von 20 bis 40 Gew.-% auf.

Die Erfindung umfasst auch ein Verfahren zur Herstellung der hierin beschriebenen erfindungsgemäßen gemischtmetallischen Phosphatverbindung, bei dem man eine wässrigen Dispersion von Kupfer(II)hydroxid und von Verbindungen der Dotierungsmetalle mit einer Menge an Phosphorsäure für einen Zeitraum 0,1 - 10 Stunden bei Temperaturen im Bereich von 15 bis 150°C umsetzt, wobei die Menge an Phosphorsäure so gewählt wird, dass das molare Verhältnis von Phosphorsäure H₃PO₄ zu der molaren Gesamtmenge an eingesetztem Hauptmetall (Kupfer) und eingesetzten Dotierungsmetallen größer als 1:1 ist, und das feste Produkt aus dem Reaktionsgemisch gewinnt.

Zweckmäßigerweise werden bei dem erfindungsgemäßen Verfahren das Kupfer(II)hydroxid und die Verbindungen eines oder mehrerer Dotierungsmetalle in den gewünschten Mengen in wässriger Dispersion vorgelegt. Die Phosphorsäure wird dieser wässrigen Dispersion zweckmäßig in kleinen Mengen nach und nach, beispielsweise durch Zutropfen, zugesetzt. Die Phosphorsäure kann grundsätzlich in beliebiger Konzentration verwendet werden. Mit Vorteil verwendet man hochkonzentrierte Säure, wie die handelsübliche 85%ige Phosphorsäure, um große Volumina zu vermeiden. Dotierungsmetalle können alternativ auch in die Phosphorsäurelösung eingebracht und über diese der Kupfer(II)hydroxid-Dispersion zugegeben werden.

Das Reaktionsgemisch wird dann für einen Zeitraum zum Sieden erhitzt, günstigerweise für etwa 0,5 bis 1,5 h. Besonders vorteilhaft ist es, wenn man in zwei Temperaturstufen arbeitet, indem man das Reaktionsgemisch vor dem Sieden zunächst für einen Zeitraum von etwa 0,5 bis 1,5 h auf eine Temperatur von 20 bis 80 °C, vorzugsweise auf eine Temperatur im Bereich um 50 °C, erwärmt und anschließend das Reaktionsgemisch, wie oben erwähnt, beispielsweise für 0,5 bis 1,5 h, auf Siedetemperatur erhitzt. Gegebenenfalls kann es in dieser Stufe ausreichen, auf 80 bis 100 °C zu erwärmen.

Im Anschluss an die Umsetzung, für die gewöhnlich höchstens 2 h ausreichen, wird das Reaktionsgemisch zweckmäßigerweise auf eine Temperatur unter 30 °C abgekühlt, auf einen Filter, wie eine Membranfilterpresse, gegeben, gewaschen, abgepresst und trocken geblasen. Danach kann das Produkt mit Vorteil bis zu einem Glühverlust von weniger als 6 % weiter getrocknet und vermahlen werden.

In einer bevorzugten Ausführungsform des erfindungsgemäßen Verfahrens sind die Verbindungen der Dotierungsmetalle aus der Gruppe ausgewählt, bestehend aus Oxiden, Hydroxiden, Sulfaten, Carbonaten und Hydrogencarbonaten der Dotierungsmetalle, einschließlich gemischtmetallischen Verbindungen der vorgenannten. Die Verwendung der vorgenannten Anionen in den Verbindungen der Dotierungsmetalle ist aus physiologischer Sicht vorteilhaft, da sie auch in anderen Formulierungen, z.B. im Bereich der Lebensmittelzusatzstoffe eingesetzt werden und gesundheitlich überwiegend unbedenklich sind, weshalb sich ihre Verwendung insbesondere in Absorbern für die Herstellung von Lebensmittelverpackungen eignet.

In einer weiteren bevorzugten Ausführungsform des erfindungsgemäßen Verfahrens führt man die Umsetzung der wässrigen Dispersion mit der Phosphorsäure für einen Zeitraum von höchstens 4 h, vorzugsweise höchstens 2 h durch.

### Beispiele

### Beispiel 1

Nach dem folgenden Reaktionsschema wurden verschiedene erfindungsgemäße gemischtmetallische Phosphatverbindungen hergestellt. Die eingesetzten Mengen der Ausgangsverbindungen, die Verbindungen der Dotierungsmetalle, die Reaktionszeiten und Reaktionstemperaturen sind in der nachfolgenden Tabelle 1 angegeben. Die Produktausbeuten und die durch Analyse ermittelten Mengen an Phosphor und Metallen in den Produkten, angegeben als die jeweiligen Oxide, sind in der nachfolgenden Tabelle 2 wiedergegeben.

### Reaktionsschema

Kupfer(II)oxid wurde zusammen mit Verbindungen von Dotierungsmetallen (CaO, Al₂O₃ und/oder Fe₂O₃) in Wasser dispergiert und der wässrigen Dispersion nach und nach 85%ige Phosphorsäure, hierin angegeben in Gramm P₂O₅, zugegeben. Das Reaktionsgemisch wurde für einen Zeitraum t auf eine Temperatur T erhitzt, anschließend auf unter 30 °C abkühlen gelassen und auf eine Membranfilterpresse gegeben. Der Filterkuchen wurde einmal mit Wasser kurz nachgewaschen, abgepresst, trocken geblasen und anschließend bis zu einem Glühverlust von weniger als 6% getrocknet und vermahlen.

**Tabelle 1**

| Bsp. Nr. | CuO [g] | CaO [g] | Al₂O₃ [g] | Fe₂O₃ [g] | H₂O [ml] | P₂O₅ [g] | Zeit t [h] | Temp. T [°C] |
|---|---|---|---|---|---|---|---|---|
| 1 | 81,5 | 57,5 | --- | --- | 9000 | 87 | 1 | 95 |
| 2 | 147,0 | 11,5 | --- | --- | 8500 | 87 | 1 | 95 |
| 3 | 155,0 | 6,0 | 0,3 | 0,2 | 7000 | 87 | 1 | 98 |
| 4 | 161,5 | 1,0 | --- | --- | 5000 | 87 | 1 | 92 |
| 5 | 81,5 | --- | 78,5 | --- | 9000 | 87 | 1 | 95 |
| 6 | 130,5 | --- | --- | 16,5 | 8600 | 87 | 1 | 93 |
| 7 | 130,5 | 0,1 | --- | 16,4 | 8600 | 87 | 1 | 93 |

**Tabelle 2**

| Bsp. Nr. | Ausbeute [%] | P₂O₅ [Gew.-%] | CuO [Gew.-%] | CaO [Gew.-%] | Al₂O₃ [Gew.-%] | Fe₂O₃ [Gew.-%] |
|---|---|---|---|---|---|---|
| 1 | 96 | 38,5 | 36,0 | 25,5 | --- | --- |
| 2 | 95 | 35,4 | 59,9 | 4,7 | --- | --- |
| 3 | 96 | 35,0 | 62,4 | 2,4 | 0,1 | 0,1 |
| 4 | 97 | 34,9 | 64,7 | 0,4 | --- | --- |
| 5 | 96 | 35,2 | 33,0 | --- | 31,8 | --- |
| 6 | 98 | 37,1 | 55,8 | --- | --- | 7,1 |
| 7 | 98 | 37,1 | 55,8 | 0,04 | --- | 7,1 |

### Aufheizversuche und Absorption

Erfindungsgemäße gemischtmetallische Phosphatverbindung wurde fein vermahlen und anschließend mittels eines Extruders in Gehalten von 2 Gew.-% und 6 Gew.-% in Low Density Polyethylen (LD-PE; Produkt Lupolen 1800S der Firma LyondellBasell, Niederlande) unter Erhalt eines Granulats eingearbeitet. Aus den Granulaten wurden mittels eines Spritzgussautomaten (Typ Babyplast der Firma Christmann Kunststofftechnik GmbH, Kierspe, Deutschland) plattenförmige Probekörper (4 cm x 3 cm x 0,2 cm) hergestellt.

Zu Vergleichszwecken wurden entsprechende Probekörper aus reinem LD-PE ohne Zusatz zur Bestimmung eines Blindwertes sowie Probekörper mit 2 Gew.-% und 6 Gew.-% reinem Kupferhydroxidphosphat (Cu₂(OH)PO₄; KHP; Chemische Fabrik Budenheim KG) hergestellt.

Die plattenförmigen Probekörper wurden senkrecht zur Plattenebene mit einer handelsüblichen Infrarotlampe (100 Watt Nennleistung) in einem Abstand von 20 cm von der Plattenoberfläche bestrahlt und die Temperatur der bestrahlten Fläche berührungslos mittels eines IR-Thermometers über die Bestrahlungszeit von 15 Minuten gemessen.

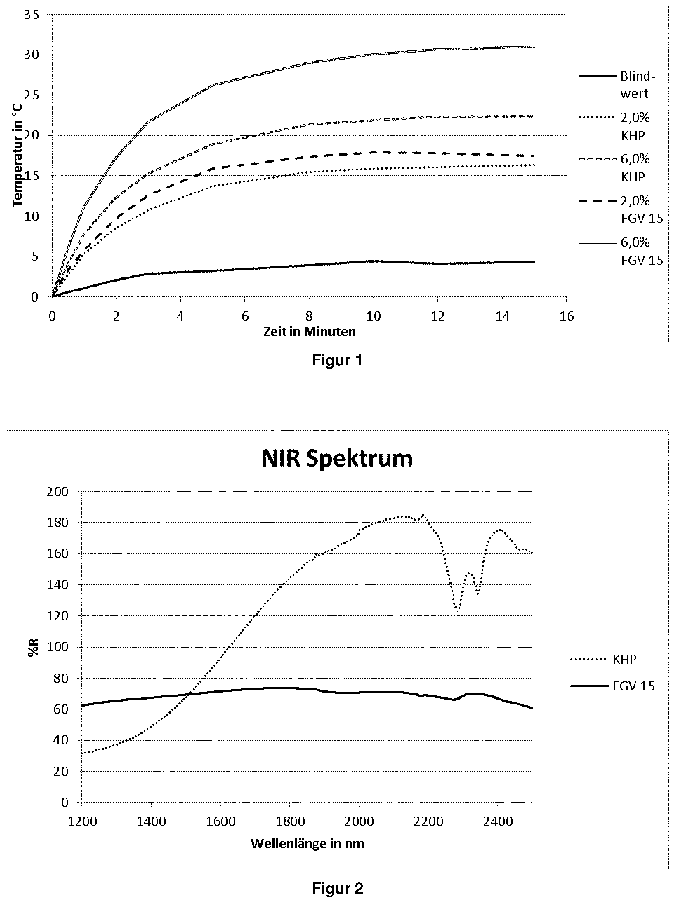

Die Ergebnisse der Temperaturmessungen mit der erfindungsgemäßen gemischtmetallischen Phosphatverbindung gemäß Bsp. Nr. 6 (FGV 15) und mit reinem Kupferhydroxidphosphat (KHP) sind in Figur 1 wiedergegeben.

Die Probekörper mit den Zusätzen von Phosphatverbindungen zeigen gegenüber der Blindprobe ohne Zusatz deutlich höhere Aufheizgeschwindigkeiten, und es werden in den Probekörper mit den Zusätzen von Phosphatverbindungen insgesamt höhere Temperaturen erreicht. Bei gleichen Konzentrationen der Phosphatverbindungen (2 Gew.-% bzw. 6 Gew.-%) zeigen die Probekörper mit der erfindungsgemäßen gemischtmetallischen Phosphatverbindung (FGV 15) gegenüber den Probekörpern mit reinem Kupferhydroxidphosphat (KHP) ebenfalls höhere Aufheizgeschwindigkeiten und insgesamt höhere erreichte Temperaturen.

Figur 2 zeigt das NIR-Spektrum der in den Aufheizversuchen eingesetzten erfindungsgemäßen gemischtmetallischen Phosphatverbindung (FGV 15) im Vergleich zu reinem Kupferhydroxidphosphat (KHP) über den Wellenlängenbereich von 1200 bis 2500 nm. Auf der Ordinate ist die prozentuale Reflexion (%R) aufgetragen. Je niedriger die prozentuale Reflexion ist, desto stärker ist die Absorption. Deutlich ist zu erkennen, dass die erfindungsgemäße gemischtmetallische Phosphatverbindung (FGV 15) über nahezu den gesamten Wellenlängenbereich eine starke Absorption zeigt, wogegen das reine Kupferhydroxidphosphat (KHP) eine gute Absorption nur bis etwa 1600 nm aufweist, die Absorption aber im längerwelligen Strahlungsbereich ab 1600 nm bis 2500 nm deutlich abfällt.

Daher lässt sich die erfindungsgemäße gemischtmetallische Phosphatverbindung im Vergleich zu reinem Kupferhydroxidphosphat als Strahlungsabsorber unter Nutzung von vergleichsweise preiswerten längerwelligen Strahlern oder von Strahlern, die in einen breiten Wellenlängenbereich abdecken, deutlich effektiver einsetzen.

## Patentansprüche

1. Gemischtmetallische Phosphatverbindung, welche als Hauptmetall Kupfer in zweiwertiger Oxidationsstufe in einem Anteil von wenigstens 90,0 At.-% und ein oder mehrere Dotierungsmetalle in einem Gesamtanteil der Dotierungsmetalle von wenigstens 0,01 bis höchstens 10,0 At.-% enthält, wobei die Dotierungsmetalle aus der Gruppe ausgewählt sind, bestehend aus den Elementen der 1. und 2. Hauptgruppe und der 8. Nebengruppe der Elemente des Periodensystems, AI, Sn, Si, Bi, Cr, Mo, Mn und den Lanthaniden, wobei sich die angegebenen Metallanteile auf die Gesamtmenge der Metalle in der gemischtmetallischen Phosphatverbindung beziehen und wobei die gemischtmetallische Verbindung einen Phosphatgehalt, ausgedrückt als P₂O₅, im Bereich von 10 bis 60 Gew.-% aufweist.

2. Gemischtmetallische Phosphatverbindung nach Anspruch 1, **dadurch gekennzeichnet, dass** sie
im UV-VIS-IR-Spektrum bei wenigstens einer Wellenlänge innerhalb des Wellenlängenbereichs von 1400 bis 2200 nm eine Absorption aufweist, die wenigstens 50% des Absorptionsmaximums innerhalb des Wellenlängenbereichs von 600 bis 1400 nm beträgt.

3. Gemischtmetallische Phosphatverbindung nach einem der Ansprüche 1 oder 2, **dadurch gekennzeichnet, dass** der Gesamtanteil der Dotierungsmetalle im Bereich von 0,1 bis 10,0 At.-%, vorzugsweise im Bereich von 0,5 bis 10,0 At.-%, besonders bevorzugt im Bereich von 1,0 bis 10,0 At.-% oder im Bereich von 2,0 bis 5,0 At.-% liegt.

4. Gemischtmetallische Phosphatverbindung nach einem der Ansprüche 1 bis 3, **dadurch gekennzeichnet, dass** sie das Hauptmetall Kupfer in zweiwertiger Oxidationsstufe in einem Anteil von wenigstens 95,0 At.-% enthält.

5. Gemischtmetallische Phosphatverbindung nach einem der Ansprüche 1 bis 4, **dadurch gekennzeichnet, dass** die Dotierungsmetalle aus der Gruppe ausgewählt sind, bestehend aus Ca, AI, Fe, Sn und Zn.

6. Gemischtmetallische Phosphatverbindung nach einem der Ansprüche 1 bis 5, **dadurch gekennzeichnet, dass** sie einen Phosphatgehalt, ausgedrückt als P₂O₅, im Bereich von 15 bis 50 Gew.-%, vorzugsweise im Bereich von 20 bis 40 Gew.-% aufweist.

7. Verfahren zur Herstellung einer gemischtmetallischen Phosphatverbindung nach einem der Ansprüche 1 bis 6,
bei dem man eine wässrige Dispersion von Kupfer(II)hydroxid und von Verbindungen der Dotierungsmetalle mit einer Menge an Phosphorsäure für einen Zeitraum 0,1 - 10 Stunden bei Temperaturen im Bereich von 15 bis 150°C umsetzt, wobei die Menge an Phosphorsäure so gewählt wird, dass das molare Verhältnis von Phosphorsäure H₃PO₄ zu der molaren Gesamtmenge an eingesetztem Hauptmetall Kupfer und eingesetzten Dotierungsmetallen größer als 1:1 ist,
und das feste Produkt aus dem Reaktionsgemisch gewinnt.

8. Verfahren nach Anspruch 7, **dadurch gekennzeichnet, dass** die Verbindungen der Dotierungsmetalle aus der Gruppe ausgewählt sind, bestehend aus Oxiden, Hydroxiden, Sulfaten, Carbonaten und Hydrogencarbonaten der Dotierungsmetalle, einschließlich gemischtmetallischen Verbindungen der vorgenannten.

9. Verfahren nach einem der Ansprüche 7 und 8, **dadurch gekennzeichnet, dass** man die Umsetzung der wässrigen Dispersion mit der Phosphorsäure für einen Zeitraum von höchstens 4 h, vorzugsweise höchstens 2 h durchführt.

10. Verwendung einer gemischtmetallischen Phosphatverbindung nach einem der Ansprüche 1 bis 6 für die Herstellung von Vorformlingen (Preforms) aus thermoplastischem Polymer, welche in Blasformverfahren zur Herstellung von Polymerhohlkörpern durch Aufheizung des Vorformlings unter Strahlungseinwirkung einsetzbar sind, wobei die gemischtmetallische Phosphatverbindung oder ein Gemisch von gemischtmetallischen Phosphatverbindungen in einer Menge von 0,0005 bis 10 Gew.-% in dem thermoplastischen Polymer fein verteilt, dispergiert oder gelöst wird.

11. Verwendung einer gemischtmetallischen Phosphatverbindung nach einem der Ansprüche 1 bis 6 als Strahlungsabsorber für das Laserschweißen von Kunststoffgegenständen aus thermoplastischem Polymer, wobei die gemischtmetallische Phosphatverbindung oder ein Gemisch von gemischtmetallischen Phosphatverbindungen in einer Menge von 0,01 bis 5 Gew.-% in dem thermoplastischen Polymer fein verteilt, dispergiert oder gelöst wird.

## Claims

1. A mixed-metallic phosphate compound which contains as the main metal copper in the divalent oxidation state in a proportion of at least 90.0 at-% and one or more doping metals in a total proportion of the doping metals of at least 0.01 to at most 10.0 at-%, wherein the doping metals are selected from the group consisting of the elements of the first and second main groups and the eighth subgroup of the elements of the periodic table, Al, Sn, Si, Bi, Cr, Mo, Mn and the lanthanides, wherein the stated metal proportions relate to the total amount of the metals in the mixed-metallic phosphate compound and wherein the mixed-metallic compound has a phosphate content expressed as P₂O₅ in the range of 10 to 60 wt-%.

2. A mixed-metallic phosphate compound according to claim 1 **characterised in that** in the UV-VIS-IR spectrum at at least one wavelength within the wavelength range of 1400 to 2200 nm it has an absorption which is at least 50% of the absorption maximum within the wavelength range of 600 to 1400 nm.

3. A mixed-metallic phosphate compound according to one of claims 1 or 2 **characterised in that**
the total proportion of the doping metals is in the range of 0.1 to 10.0 at-%, preferably in the range of 0.5 to 10.0 at-%, particularly preferably in the range of 1.0 to 10.0 at-% or in the range of 2.0 to 5.0 at-%.

4. A mixed-metallic phosphate compound according to one of claims 1 to 3 **characterised in that** it contains the main metal copper in the divalent oxidation state in a proportion of at least 95.0 at-%.

5. A mixed-metallic phosphate compound according to one of claims 1 to 4 **characterised in that** the doping metals are selected from the group consisting of Ca, Al, Fe, Sn and Zn.

6. A mixed-metallic phosphate compound according to one of claims 1 to 5 **characterised in that** it has a phosphate content expressed as P₂O₅ in the range of 15 to 50 wt-%, preferably in the range of 20 to 40 wt-%.

7. A method for producing a mixed-metallic phosphate compound according to one of claims 1 to 6
in which an aqueous dispersion of copper(II)hydroxide and compounds of the doping metals is reacted with an amount of phosphoric acid for a period of 0.1 - 10 hours at temperatures in the range of 15 to 150°C, wherein the amount of phosphoric acid is so selected that the molar ratio of phosphoric acid H₃PO₄ to the total molar amount of main metal copper used and doping metals used is greater than 1:1,
and the solid product is obtained from the reaction mixture.

8. A method according to claim 7 **characterised in that** the compounds of the doping metals are selected from the group consisting of oxides, hydroxides, sulphates, carbonates and hydrogen carbonates of the doping metals including mixed-metallic compounds of the aforesaid.

9. A method according to one of claims 7 and 8 **characterised in that** the reaction of the aqueous dispersion with the phosphoric acid is carried out for a period of at most 4 hours, preferably at most 2 hours.

10. Use of a mixed-metallic phosphate compound according to one of claims 1 to 6 for producing preforms of thermoplastic polymer which can be used in blow moulding methods for producing hollow polymer bodies by heating the preform under the action of radiation, wherein the mixed-metallic phosphate compound or a mixture of mixed-metallic phosphate compounds is finely distributed, dispersed or dissolved in an amount of 0.0005 to 10 wt-% in the thermoplastic polymer.

11. Use of a mixed-metallic phosphate compound according to one of claims 1 to 6 as a radiation absorber for laser welding of plastic articles of thermoplastic polymer, wherein the mixed-metallic phosphate compound or a mixture of mixed-metallic phosphate compounds is finely distributed, dispersed or dissolved in an amount of 0.01 to 5 wt-% in the thermoplastic polymer.

## Revendications

1. Composé phosphate métallique mixte qui contient en tant que métal principal du cuivre à un degré d'oxydation divalent, selon une proportion d'au moins 90,0 % en atomes, et un ou plusieurs métaux dopants selon une proportion totale des métaux dopants d'au moins 0,01 à au plus 10,0 % en atomes, les métaux dopants étant choisis dans le groupe composé des éléments du premier et du deuxième groupes principaux et du huitième groupe secondaire des éléments du Tableau Périodique, Al, Sn, Si, Bi, Cr, Mo, Mn et les lanthanides, les proportions indiquées des métaux étant rapportées à la quantité totale des métaux dans le composé phosphate métallique mixte, et le composé métallique mixte présentant une teneur en phosphate, exprimée en P₂O₅, comprise dans la plage de 10 à 60 % en poids.

2. Composé phosphate métallique mixte selon la revendication 1, **caractérisé en ce qu'**il présente, dans le spectre UV-VIS-IR, à au moins une longueur d'onde dans la plage de longueurs d'onde de 1400 à 2200 nm, une absorption qui est d'au moins 50 % du maximum d'absorption dans la plage de longueurs d'onde de 600 à 1400 nm.

3. Composé phosphate métallique mixte selon l'une des revendications 1 ou 2, **caractérisé en ce que** la proportion totale des métaux dopants est comprise dans la plage de 0,1 à 10,0 % en atomes, de préférence dans la plage de 0,5 à 10,0 % en atomes, d'une manière particulièrement préférée dans la plage de 1,0 à 10,0 % en atomes, ou dans la plage de 2,0 à 5,0 % en atomes.

4. Composé phosphate métallique mixte selon l'une des revendications 1 à 3, **caractérisé en ce qu'**il contient le métal principal cuivre à un degré d'oxydation divalent selon une proportion d'au moins 95,0 % en atomes.

5. Composé phosphate métallique mixte selon l'une des revendications 1 à 4, **caractérisé en ce que** les métaux dopants sont choisis dans le groupe composé de Ca, Al, Fe, Sn et Zn.

6. Composé phosphate métallique mixte selon l'une des revendications 1 à 5, **caractérisé en ce qu'**il présente une teneur en phosphate, exprimée en P₂O₅, comprise dans la plage de 15 à 50 % en poids, de préférence dans la plage de 20 à 40 % en poids.

7. Procédé de fabrication d'un composé phosphate métallique mixte selon l'une des revendications 1 à 6, dans lequel on fait réagir une dispersion aqueuse d'hydroxyde de cuivre(II) ou de composés des métaux dopants avec une certaine quantité d'acide phosphorique pendant 0,1 à 10 heures à des températures comprises dans la plage de 15 à 150 °C, la quantité d'acide phosphorique étant choisie de telle sorte que le rapport molaire de l'acide phosphorique H₃PO₄ à la quantité totale en moles du métal principal cuivre utilisé et des métaux dopants utilisés soit supérieur à 1:1, et on obtient le produit solide à partir du mélange réactionnel.

8. Procédé selon la revendication 7, **caractérisé en ce que** les composés des métaux dopants sont choisis dans le groupe composé d'oxydes, d'hydroxydes, de sulfates, de carbonates et d'hydrogénocarbonates des métaux dopants, y compris les composés métalliques mixtes de ceux-ci.

9. Procédé selon l'une des revendications 7 et 8, **caractérisé en ce qu'**on met en oeuvre la réaction de la dispersion aqueuse avec l'acide phosphorique pendant une durée d'au plus 4 h, de préférence d'au plus 2 h.

10. Utilisation d'un composé phosphate métallique mixte selon l'une des revendications 1 à 6 pour la fabrication de préformes à partir d'un polymère thermoplastique, qui peut être utilisé dans un procédé de moulage par soufflage pour la fabrication de corps creux polymères par chauffage de la préforme sous l'action d'un rayonnement, le composé phosphate métallique mixte, ou un mélange de composés phosphates métalliques mixtes étant finement réparti, dispersé ou dissous dans le polymère thermoplastique, selon une quantité de 0,0005 à 10 % en poids .

11. Utilisation d'un composé phosphate métallique mixte selon l'une des revendications 1 à 6 en tant qu'agent absorbant les rayonnements lors d'un soudage laser d'objets en plastique en polymère thermoplastique, le composé phosphate métallique mixte ou un mélange de composés phosphates métalliques mixtes étant finement réparti, dispersé ou dissous dans le polymère thermoplastique, selon une quantité de 0,01 à 5 % en poids.
